# EUROPÄISCHE PATENTANMELDUNG

(11) **EP 0 853 119 A2**
(43) Veröffentlichungstag der Anmeldung: **15.07.1998**
(21) Anmeldenummer: 97120367.4
(22) Anmeldetag: 20.11.1997
(51) Int. Cl.: C12C 1/073

(54) **Verfahren zum Darren von Malz und Vorrichtung zur Durchführung des Verfahrens**

(30) Priorität: 13.01.1997 DE 19700826
(71) Anmelder: Frei, Willi, 9016 St. Gallen (CH)
(72) Erfinder: Frei, Willi, 9016 St. Gallen (CH)
(74) Vertreter: Füchsle, Klaus, Dipl.-Ing.

(57) **Zusammenfassung**

Es werden ein Verfahren zum Darren von Malz und die dazu erforderliche Vorrichtung zur Durchführung dieses Verfahrens offenbart. Dabei kommen drei Darrhorden (A, B und C) zum Einsatz. In einer der drei Horden ist immer ein Schwelkbetrieb im Gange, während parallel zu diesem Schwelkbetrieb auf der zweiten Horde teilweise abgedarrt und in der dritten Horde teilweise vorgetrocknet (vorgeschwelkt) wird.

## Beschreibung

Die Erfindung betrifft ein Verfahren zum Darren von Malz nach Anspruch 1 und eine Vorrichtung zur Durchführung des Verfahrens nach Anspruch 5.

Der Stand der Technik und die wichtigsten verfahrenstechnischen Grundlagen zum Darrprozeß sind in konzentrierter Form in der DE-B-38 15 845 beschrieben.

Grundsätzlich läuft das Darren von Braumalz in zwei Phasen ab, dem sogenannten Schwelken in der ersten Phase und dem Abdarren in der zweiten Phase. Bei beiden Phasen wird vorgewärmte Luft durch die zu trocknende Malzschicht gefördert. Der lufttechnische Unterschied der beiden Phasen besteht darin, daß in der Schwelkphase die Trocknungsluft praktisch gesättigt die Malzschicht verläßt, während in der Abdarrphase die Trocknungsluft ungesättigt und damit trocknungstechnisch unwirtschaftlich genutzt die Malzschicht verläßt. Es ist deshalb naheliegend, zum Zweck der Wärmeeinsparung zwei Horden einzusetzen und die beiden Darrphasen zeitlich parallel ablaufen zu lassen. Dadurch wird die Voraussetzung geschaffen, daß die unwirtschaftlich genutzte Abluft aus der Abdarrhorde der Zuluft für die Schwelkhorde vollumfänglich zugemischt wird. Somit strömt nur praktisch gesättigte Abluft in die Atmosphäre, wodurch Wärmerückgewinnungssysteme, z.B. Glasrohr-Wärmetauscher, besonders effizient eingesetzt werden können. Mittels diesem Zusatzgerät wird Energie aus der verbrauchten, gesättigten Abluft an die praktisch massenstromgleiche Zuluft übertragen. Mit der Kombination Zweihordendarre und großflächig bemessener Wärmerückgewinnung werden beim Darren herkömmlicher Braunmalze Wärmeverbrauchswerte von 550 - 580 kWh pro t Fertigmalz erreicht.

Der Erfindung liegt nun die Aufgabe zu Grunde, den mit dem bekannten Darrsystem bereits optimierten Wärmeverbrauch beim Malzdarren nochmals deutlich zu senken.

Diese Aufgabe wird durch das Verfahren mit den Merkmalen des Anspruchs 1 sowie durch die Vorrichtung nach Anspruch 5 gelöst.

Die verfahrenstechnische Idee der Erfindung besteht darin, den beiden Horden zum Schwelken und Abdarren eine dritte Horde zum Vortrocknen vorzuschalten und alle drei Horden lufttechnisch derart miteinander zu verknüpfen, daß die zur Vortrocknung benötigte Zuluft mit Energie vorgewärmt wird, die zusätzlich über die Wärmerückgewinnungsanlage aus der Schwelkabluft zurückgewonnen wird.

Gleichzeitig wird berücksichtigt, daß in einer Mälzerei das zu darrende Grünmalz täglich als eine Charge in weniger als vier Stunden auf die Darre beladen werden muß. Zur Sicherstellung des verfahrenstechnischen Merkmales, wonach in einer der drei Horden immer ein Schwelkbetrieb im Gange ist, wird die täglich anfallende Grünmalzmenge in zwei Teilmengen aufgeteilt, wobei etwa 55% des Grünmalzes auf die Horde mit Vortrocknungsbetrieb und etwa 45% auf die Horde mit Schwelkbetrieb beladen wird.

Als besonders einfach im Betriebsablauf hat sich erwiesen, daß der 45%-Anteil immer auf die gleiche Horde, z.B. Horde A, geladen und dort im 24-Stundenzyklus geschwelkt und abgedarrt wird.

Bei den Horden B und C ist die Luftversorgung derart gestaltet, daß der 55%-Anteil im täglichen Wechsel einmal auf B, anderntags auf C geladen und in jeder Horde im 48-Stundenzyklus vorgetrocknet, geschwelkt und abgedarrt werden kann. Damit entfällt das Umladen der Teilchargen, und das Umschalten von einer Trocknungsphase zur anderen erfolgt über das Öffnen bzw. Schließen von Luftklappen. Ein möglicher Betriebsablauf ist in Tabelle 1 dargestellt, wobei der Dauerbetrieb am Dienstag um 6.oo Uhr beginnt.

Eine für die Durchführung des Verfahrens geeignete Vorrichtung ist in der Figur dargestellt und wird im folgenden beschrieben. Die drei Horden A, B und C werden im besonderen bei Großanlagen vorzugsweise im Querschnitt kreisförmig ausgeführt und übereinander angeordnet. Damit können die gleichen Hordendurchmesser eingesetzt werden wie bei den Horden, die für das mehrtägige Keimen des Malzes benötigt werden; d.h. Keim- und Darrhorden können in einem einzigen Turm mit konstantem Durchmesser untergebracht werden.

Jeder Horde ist ein Darrluftventilator 1 mit einstellbarer Drehzahl zugeordnet. Ein Zuluftkanalnetz 2 mit Zuluftklappen 3 und Lufterhitzer 4 erlauben einen individuellen, jedoch auf den Betrieb der anderen Horden abgestimmten Darrbetrieb.

Horde A ist für das Schwelken und Abdarren ausgelegt, während Horden B und C für Vortrocknen, Schwelken und Abdarren ausgelegt sind. Da für das Vortrocknen keine Wärme aus dem Lufterhitzer 4 erforderlich ist und die Horden B und C um 24 Stunden versetzt gefahren werden, ist für diese beiden Horden nur ein Lufterhitzer 4 notwendig.

Nach dem Durchströmen der Malzschicht 5 wird die Abluft je nach Trocknungsphase unterschiedlich weitergeleitet. Im Vortrocknungs-(Vorschwelk)-Betrieb gelangt die Abluft infolge des tiefen Temperaturniveaus über die Vortrocknungsklappe 6 direkt ins Freie. Beim Schwelken mit gesättigter Abluft strömt die Luft über die Schwelkklappe 7 und den Schwelkabluftschacht 8 zur Wärmerückgewinnungsanlage 9. Die unwirtschaftlich genutzte Trocknungsluft aus der Abdarrphase wird über die Abdarrklappe 10 und dem Abdarrschacht 11 der Zuluft im Zuluftkanalnetz 2 zugemischt.

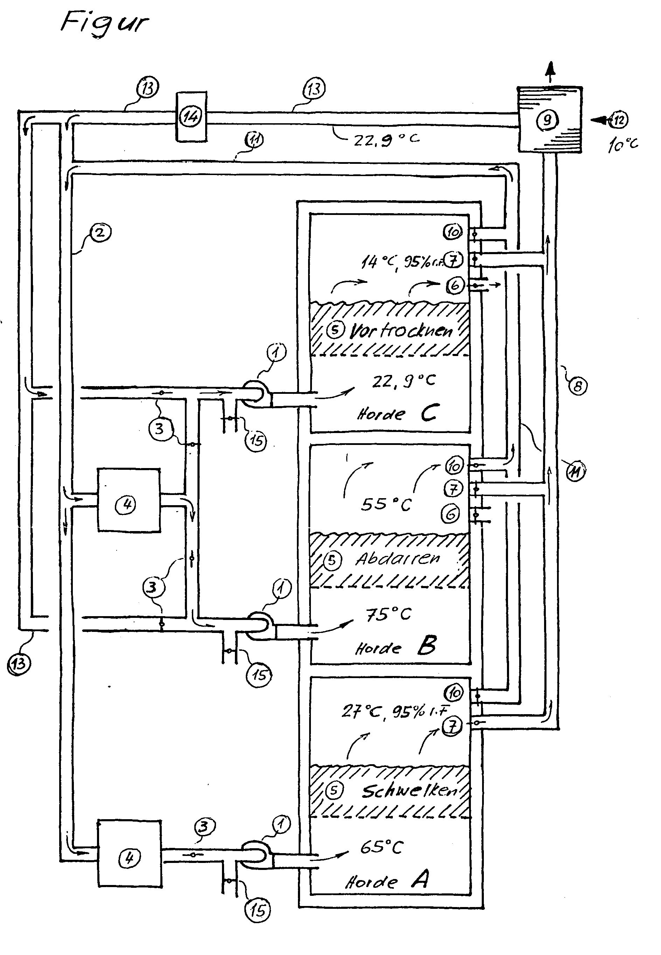

Die in der Wärmerückgewinnungsanlage 9 vorgewärmte Außenluft 12 strömt über den Zuluftkanal 13 in das Zuluftkanalnetz 2. Sind externe Abwärmequellen, wie z.B. aus Blockheizkraftwerken, vorhanden, so wird die Energie an der in der in Fig. 1 gezeigten Position über einen Wärmetauscher 14 an die vorgewärmte Außenluft 12 übertragen.

Nach Beendigung des Darrprozesses und vor dem Abräumen des Fertigmalzes kühlt der Darrventilator 1 über die Außenluftklappe 15 die Malzschicht 5 auf unter 40°C ab. Auch diese Kühlluft wird über die Abdarrklappe 10 zur vollumfänglichen Energieverwertung in das Zuluftkanalnetz 2 rezirkuliert.

Im folgenden wird die Funktion der Dreihorden-Vorschwelk-Darre am Beispiel einer Darre mit einer Tageskapazität von 200 t Fertigmalz beschrieben und die Auswirkungen auf den Wärmeverbrauch ermittelt, wenn die Darre nach dem erfindungsgemäßen Ablauf betrieben wird. Als Referenzperiode wird der Dauerbetrieb gemäß Tabelle 1 in der Zeit vom Dienstag 6.00 Uhr bis Mittwoch 6.00 Uhr herangezogen. Für einen durchschnittlichen, repräsentativen Betrieb der Anlage mit der erfindungsgemäßen Vortrocknung sind die Betriebszustände, wie sie am Dienstag um ca. 12.00 Uhr erwartet werden, in der Figur aufgezeigt.

Um 6.00 Uhr sind die Horden A und C leer. Auf der Horde B befindet sich der 55%-Anteil vom Vortag beim Schwelken. Zuerst wird Horde C mit dem 55%-Anteil beladen und nach einer Stunde wird mit dem Vortrocknen begonnen. Von 7.00 Uhr bis 21.00 Uhr wird diese Malzschicht mit ca. 220'000 kg/h Luft vorgetrocknet, wobei die Zulufttemperatur je nach Jahreszeit und Betriebszeit zwischen 18 und 30°C beträgt. Die Ablufttemperatur liegt zwischen 8 und 20°C und somit zu tief für den Einsatz in einer Wärmerückgewinnungsanlage. Ab 21.00 Uhr wird auf Schwelken umgeschaltet, d.h. die Darrluftmenge wird auf 330'000 kg/h erhöht und mit dem Lufterhitzer auf 55 - 65°C vorgewärmt.

Die Abluft verläßt die Malzschicht mit einem mittleren Zustand von 27°C und 95% relativer Feuchte.

Auf der Horde A wird nach Abschluß des Beladevorganges bei Horde C um ca. 8.00 Uhr der restliche 45%-Anteil beladen und um 9.00 Uhr, wenn der Schwelkvorgang auf Horde B beendet ist, mit dem Schwelken auf Horde A begonnen. Damit ist ein lückenloser Übergang des Schwelkvorganges, jedoch ohne Überschneiden, gewährleistet. Dadurch wird die Wämerückgewinnungsanlage ununterbrochen mit gesättigter Abluft versorgt. In der Horde A liegt 45% der Grünmalzcharge. Trotzdem ist ebenfalls eine Schwelkluftmenge von 330'000 kg/h erforderlich, da dieser Anteil ohne Vortrocknung direkt dem Schwelkvorgang zugeführt wird. Damit ist nicht nur der Abluftzustand, sondern auch die Abluftmenge an der Wärmerückgewinnungsanlage über 24 Stunden praktisch konstant. Um 21.00 Uhr beginnt mit einer auf 220'000 kg/h reduzierten Luftmenge der Abdarrvorgang, bei dem die Ablufttemperatur zwischen 35 und 75°C schwankt und demzufolge rezirkuliert wird. Bis um 6.00 Uhr am Mittwoch ist der Darrvorgang in Horde A abgeschlossen.

In der Horde B findet bis um 9.00 Uhr der Schwelkvorgang mit dem 55% Anteil vom Vortag bei 330'000 kg/h Zuluft statt. Bei der anschließenden Abdarrphase wird wiederum der Zuluftstrom auf 220'000 kg/h reduziert und die Abluft rezirkuliert. Von 20.00 Uhr bis anderntags um 6.00 Uhr steht die Horde leer. Diese Zeit kann genutzt werden, um ohne Störung des Dauerbetriebes Wartungsarbeiten durchzuführen.

Energetisch kann ein 24-Stunden-Dauerbetrieb in zwei Betriebsphasen aufgeteilt werden. Von 7.00 bis 21.00 Uhr ist die Anlage im erfindungsgemäßen Dreihorden-Vorschwelk-Betrieb, von 21.00 Uhr bis anderntags um 7.00 Uhr im herkömmlich Zweihorden-Betrieb. Am deutlichsten ist der Unterschied der Betriebsweise bei der Wärmerückgewinnungsanlage (WRG) ersichtlich. Betrachtet man die Dreihorden-Vorschwelk-Darre als "black box", dann sind folgende Aussagen im Jahresmittel mit 10°C und 80% r.F. Außenluftzustand zutreffend:
a) Der Abluftzustand vor dem WRG beträgt über 24 Stunden 27°C, bei 95% r.F. und 330'000 kg/h Durchsatz.
b) Während dem Vorschwelk-Betrieb wird zuluftseitig 330'000 kg/h Schwelkluft und 220'000 kg/h Vortrocknungsluft benötigt, d.h. über die WRG wird eine Gesamtaußenluftmenge von 550'000 kg/h bei unveränderter Abluftmenge von 330'000 kg/h gefördert.
c) Die Vortrocknungsluft wird nur mit Energie aus der Schwelkabluft vorgewärmt, d.h. die Schwelkabluft wird durch das ungleiche Massenstromverhältnis von 100% Schwelkluft und 167% Zuluft energetisch deutlich intensiver genutzt, wodurch die Abluft mit einem tieferen Energieniveau ins Freie geleitet wird. Der über 24 Stunden gewichtete Unterschied im Energieinhalt der Abluft ist mit der Energieeinsparung identisch.
d) Bei der herkömmlichen Zweihorden-Darre würde eine WRG mit 7200 m² Tauschfläche und einem Temperaturwirkungsgrad von 80% eingesetzt.

Bei der Dreihorden-Vorschwelk-Darre hat es sich als wirtschaftlich herausgestellt, die WRG auf die überhöhte Außenluftmenge von 550'000 kg/h auszulegen, d.h. die optimale Tauschfläche liegt bei ca. 10'000 m². Damit wird ein Temperaturwirkungsgrad von 76% im Vorschwelkbetrieb um 87% im restlichen Betrieb erreicht. Dadurch ergeben sich folgende Betriebszustände an der WRG:

| Darrsystem | Herkömmliche Zweihorden-Darre | Dreihorden-Vorschwelk-Darre Vorschwelk-Betrieb | Dreihorden-Vorschwelk-Darre übrige Zeit |
|---|---|---|---|
| Abluftmenge | 100% | 100% | 100% |
| Zuluftmenge | 100% | 167% | 100% |
| Betriebszeit | 24 h | 14 h | 10 h |
| Zuluft vor WRG | 10°C | 10°C | 10°C |
| Abluft vor WRG | 27,0°C | 27,0°C | 27,0°C |
| WRG-Wirkungsgrad | 80% | 76% | 87% |
| Zuluft nach WRG | 23,6°C | 22,9°C | 24,7°C |
| Abluft nach WRG | 23,0°C | 20,7°C | 22,7°C |
| Zusatz-Rückgewinnung | -- | 733 kW | 103 kW |
| kumuliert über 24 h | 11'292 kW | | |

Bei einem mittleren spezifischen Wärmeverbrauchswert für eine optimierte Zweihordendarre von 550 kWh pro t Fertigmalz beträgt der Wärmeverbrauch demzufolge für 200 t Fertigmalz = 110'000 kWh. Daraus resultiert mit dem Vorschwelkbetrieb eine Einsparung von 10,3%.

Zusätzlich zu dieser Reduktion zeichnet sich das Dreihorden-Vorschwelk-Darrsystem durch folgende Merkmale aus:
- Im Vergleich zu einer Zweihorden-Darre, bei der jede Malzhorde für eine volle Grünmalzcharge bemessen wird, ist die Horde A nur für 45% und die Horden B und C nur für 55% der täglich anfallenden Grünmalzmenge auszulegen.
- Für die drei Horden sind nur zwei Beheizungsanlagen erforderlich, da die Horden B und C nie gemeinsam beheizt werden.
- Die Wärmerückgewinnungsanlage ist nur für die Abluft aus einer Horde auszulegen.
- Das zeitraubende Umladen von Schwelkmalz entfällt, da jede Teilcharge in der Horde fertig gedarrt wird.
- Die Fläche der Darrhorden können an die Flächen der Keimhorden angepaßt werden, so daß sämtliche Horden für das Keimen und Darren in einem einzigen Turm mit vorzugsweise konstantem Durchmesser untergebracht werden können.

**Tabelle 1**

| Betriebsablauf Dreihorden-Vorschwelk-Darre | | | | |
|---|---|---|---|---|
| **Tag** | **Zeit** | **Horde A** | **Horde B** | **Horde C** |
| Mo | vor 6^{oo} | leer | leer | leer |
| | 6^{oo}-7^{oo} | leer | Beladen | leer |
| | 7^{oo}-8^{oo} | leer | Bela.+Vortro. | leer |
| | 8^{oo}-9^{oo} | Beladen | Vortrocknen | leer |
| | 9^{oo}-10^{oo} | Bela.+Schwe. | Vortrocknen | leer |
| | 10^{oo}-21^{oo} | Schwelken | Vortrocknen | leer |
| | 21^{oo}-24^{oo} | Abdarren | Schwelken | leer |
| Di | 0^{oo}-4^{oo} | Abdarren | Schwelken | leer |
| | 4^{oo}-5^{oo} | Kühlen | Schwelken | leer |
| | 5^{oo}-6^{oo} | Ausräumen | Schwelken | leer |
| | 6^{oo}-7^{oo} | leer | Schwelken | Beladen |
| | 7^{oo}-8^{oo} | leer | Schwelken | Bela.+Vortro. |
| | 8^{oo}-9^{oo} | Beladen | Schwelken | Vortrocknen |
| | 9^{oo}-10^{oo} | Bela.+Schw. | Abdarren | Vortrocknen |
| | 10^{oo}-18^{oo} | Schwelken | Abdarren | Vortrocknen |
| | 18^{oo}-19^{oo} | Schwelken | Kühlen | Vortrocknen |
| | 19^{oo}-20^{oo} | Schwelken | Ausräumen | Vortrocknen |
| | 20^{oo}-21^{oo} | Schwelken | leer | Vortrocknen |
| | 21^{oo}-24^{oo} | Abdarren | leer | Schwelken |
| Mi | 0^{oo}-4^{oo} | Abdarren | leer | Schwelken |
| | 4^{oo}-5^{oo} | Kühlen | leer | Schwelken |
| | 5^{oo}-6^{oo} | Ausräumen | leer | Schwelken |
| | 6^{oo}-7^{oo} | leer | Beladen | Schwelken |
| | 7^{oo}-8^{oo} | leer | Bela.+Vortro. | Schwelken |
| | 8^{oo}-9^{oo} | Beladen | Vortrocknen | Schwelken |
| | 9^{oo}-10^{oo} | Bela.+Schwe. | Vortrocknen | Abdarren |
| | 10^{oo}-18^{oo} | Schwelken | Vortrocknen | Abdarren |
| | 18^{oo}-19^{oo} | Schwelken | Vortrocknen | Kühlen |
| | Analog | Vortag | | |

## Patentansprüche

1. Verfahren zum Darren von Malz, bei dem in einer ersten Horde ein Schwelken und in einer zweiten Horde ein Abdarren des Malzes durchgeführt und eine Wärmerückgewinnungsanlage verwendet wird,
dadurch **gekennzeichnet,**
daß den beiden Horden eine dritte Horde zum Vortrocknen (Vorschwelken) des Malzes vorgeschaltet wird und die drei Horden lufttechnisch so miteinander verbunden und gesteuert werden, daß die zur Vortrocknung benötigte Zuluft mit Wärmeenergie vorgewärmt wird, die zusätzlich über die Wärmerückgewinnungsanlage aus der Abluft des Schwelkens zurückgewonnen wird.

2. Verfahren nach Anspruch 1, dadurch gekennzeichnet, daß in einer der drei Horden immer ein Schwelkbetrieb im Gange ist, wozu die täglich anfallende Grünmalzmenge in zwei Teilmengen derart aufgeteilt wird, daß etwa 55% des Grünmalzes auf die Horde im Vortrocknungsbetrieb und etwa 45% des Grünmalzes auf die Horde im Schwelkbetrieb aufgegeben wird.

3. Verfahren nach Anspruch 2, dadurch gekennzeichnet, daß der 45%ige Anteil des Grünmalzes immer auf dieselbe Horde aufgebracht und dort im 24-Stundenzyklus geschwelkt und abgedarrt wird.

4. Verfahren nach Anspruch 3, dadurch gekennzeichnet, daß bei den anderen beiden Darren die Luftversorgung derart gesteuert wird, daß der 55%ige Anteil des Grünmalzes im täglichen Wechsel einmal auf die eine Horde, anderentags auf die andere Horde aufgegeben wird und in jeder dieser Horden im 48-Stundenzyklus vorgetrocknet, geschwelkt und abgedarrt wird.

5. Vorrichtung zur Durchführung des Verfahrens nach einem der vorhergehenden Ansprüche, mit drei Horden (A, B und C), dadurch **gekennzeichnet,** daß
a) zumindest für die zwei für Vortrocknen, Schwelken und Abdarren ausgelegten Horden (B und C) nur ein Lufterhitzer (4) vorgesehen ist, der wahlweise (über Klappen 3) der einen Horde (B) oder der anderen Horde (C) zugeschaltet werden kann, und
b) zumindest diese Horden (B und C) auch mit vorgewärmter Zuluft (aus Kanal 13, unter Umgehung des Lufterhitzers 4) versorgt werden können.
